# EUROPÄISCHE PATENTSCHRIFT

(11) **EP 2 695 779 B1**
(45) Veröffentlichungstag und Bekanntmachung des Hinweises auf die Patenterteilung: **18.02.2015**
(21) Anmeldenummer: 13003222.0
(22) Anmeldetag: 25.06.2013
(51) Int. Cl.: B60T 11/32

(54) **Mehrkreis-Schutzventil für eine Luftaufbereitungsanlage**
Multi-circuit protection valve for an air treatment system
Vanne de protection à plusieurs circuits d'une installation de préparation de l'air

(30) Priorität: 25.07.2012 DE 102012014733
(43) Veröffentlichungstag der Anmeldung: 12.02.2014
(73) Patentinhaber: WABCO GmbH, 30453 Hannover (DE)
(72) Erfinder: Eggebrecht, Detlev, 30519 Hannover (DE); Ghafari, Mohammad-Reza, 30559 Hannover (DE); Hansen, Yves, 30519 Hannover (DE); Reimann, Dennis, 30657 Hannover (DE); Rüter, Rodmar, 30938 Burgwedel (DE)

(56) Entgegenhaltungen:
- DE-A1- 2 754 219
- DE-C1- 19 700 243
- DE-U1- 20 023 225

## Beschreibung

Die Erfindung betrifft ein Mehrkreis-Schutzventil für eine Luftaufbereitungsanlage, insbesondere eines Druckluftsystems eines Fahrzeugs.

In Luftaufbereitungsanlagen wird von einem Kompressor geförderte Druckluft zunächst getrocknet und gefiltert und nachfolgend über eine Versorgungsleitung an ein Mehrkreis-Schutzventil ausgegeben, das mehrere nachfolgende Verbraucherkreise, z. B. zwei Betriebsbremskreise, einen Druckluftkreis für die Niveauregulierung und Traktionsregelung, eine Feststellbremse und ggf. einen Anhängeranschluss und weitere Funktionen voneinander trennen. Hierzu weist das Mehrkreis-Schutzventil im Allgemeinen Überströmventile auf, die parallel an die gemeinsame Versorgungsleitung angeschlossen sind und im Falle eines starken Druckverlustes in einem angeschlossenen Verbraucherkreis, z. B. bei einer Leckage, sperren, um keine Rückwirkung auf die Versorgungsleitung und die anderen Verbraucherkreise zuzulassen.

Die Überströmventile weisen im Allgemeinen einen individuell einstellbaren Öffnungsdruck und einen geringeren Schließdruck auf. Sie können durch die Eingangsseite und Ausgangsseite geöffnet bzw. offen gehalten werden. Beim Befüllen des Druckluftsystems nach Starten des Kompressors können sie somit sukzessive öffnen, um die jeweiligen Verbraucherkreise in gewünschter Reihenfolge zu befüllen.

Um ein Mehrkreis-Schutzventil kompakt auszubilden, sind Ausbildungen mit einem Ventilgehäuse bekannt, das Eingangsöffnungen mit eingearbeiteten Ventilsitzen aufweist, auf die einzelne Topfmanschetten aufgesetzt werden, die jeweils eine verstellbare Ventilmembran ausbilden. Auf jede Ventilmembran wird jeweils ein Kolben aufgesetzt und über eine z. B. in einem Einzeldom aufgenommene, einstellbare Feder vorgespannt.

Die EP 31903 A1 zeigt ein Mehrkreis-Schutzventil, bei dem in Ventilbohrungen Ventilsitze eingesetzt sind, die zu einer Seite des Ventilblocks hin im Wesentlichen auf einer Ebene liegen. Eine gemeinsame Membran bildet einzelne Membranbereiche aus, die auf jeweils einem Ventilsitz liegen und somit Teile jeweils eines Überströmventils darstellen. Ein Gehäuseoberteil bildet Einzeldome zur Aufnahme von Schraubenfedern zur Einstellung des Öffnungsdruckes aus. Die Membranbereiche sind um die einzelnen Ventilsitze herum jeweils mit einem Einspannrand zwischen dem Ventilgehäuse und dem Gehäusedeckel eingespannt, sodass jeder Membranbereich umlaufend geschlossen ist und separat eingespannt wird; die einzelnen Membranbereiche sind somit voneinander durch den jeweiligen Einspannrand getrennt.

Die DE 197 00 243 C1 zeigt eine Druckluftaufbereitungseinrichtung für Kraftfahrzeugdruckluftanlagen mit einem Mehrkreisschutzventil und mehreren Überströmventilen.

Die DE 3223762 C2 zeigt ein Mehrkreis-Schutzventil mit mehreren Überströmventilen, die mit einem gemeinsamen Gehäuse und Gehäusedeckel ausgebildet werden. Hierbei sind separate einzelne Membranen aus Gummi oder gummiähnlichem Material in Form einer Kreisscheibe vorgesehen.

Die DE 2356423 A1 beschreibt ein Mehrkreis-Schutzventil mit einzelnen Überströmern, die jeweils separate Membranen aufweisen. Die Membran bewirkt hierbei eine radiale Abdichtung, d.h. bezüglich der Symmetrieachse der einzelnen Überströmventile radial nach außen.

Derartige Mehrkreis-Schutzventile ermöglichen im Allgemeinen einen sicheren Betrieb. Die Herstellung ist jedoch verhältnismäßig aufwendig.

Der Erfindung liegt die Aufgabe zugrunde, ein Mehrkreis-Schutzventil zu schaffen, das einen sicheren Betrieb gewährleistet und mit relativ geringem Aufwand ausbildbar ist.

Diese Aufgabe wird durch ein Mehrkreis-Schutzventil nach Anspruch 1 gelöst. Die Unteransprüche beschreiben bevorzugte Weiterbildungen. Weiterhin ist eine Luftaufbereitungsanlage mit einem derartigen Mehrkreis-Schutzventil vorgesehen.

Erfindungsgemäß ist vorzugsweise in dem Mehrkreis-Schutzventil eine gemeinsame Versorgungskammer ausgebildet, an die die Ventileinlasse der einzelnen Überströmventile angeschlossen sind. Hierzu ist in dem Ventilgehäuse bzw. Ventilblock eine Vertiefung ausgebildet, die sich über mehrere Überströmventile hin erstreckt bzw. in der die einzelnen Ventilsitze der Überströmventile angeordnet sind. Die Versorgungskammer umgibt somit die Ventilsitze der mehreren Überströmventile. Eine gemeinsame Membran bildet Membranbereiche für die einzelnen Überströmventile aus. Die Versorgungskammer wird zur Außenseite hin durch die Membran abgedeckt.

Bereits hierdurch werden einige Vorteile erreicht. Durch Einsatz einer gemeinsamen Membran kann eine kostengünstige Herstellung erfolgen und die Montage gegenüber dem Einsetzen separater Membranen bzw. Topfmanschetten vereinfacht werden. Die Versorgungskammer wird in dem Mehrkreis-Schutzventil selbst ausgebildet; indem hierfür nicht lediglich eine Bohrung vorgesehen ist, sondern eine sich von einer Außenfläche erstreckende, vorzugsweise unregelmäßige Vertiefung, wird ein größeres Volumen ermöglicht, das als "Gallery" zum Verteilen der geförderten Druckluft in die Verbraucherkreise sowie zum Verteilen der Druckluft aus Vorratsbehältern eines Verbraucherkreises in die anderen Verbraucherkreise dient.

Indem die Ventileinlasse direkt in der Vertiefung angeordnet sind, entfallen auch Druckluftleitungen von einem Versorgungs-Reservoir zu den Ventileinlassen.

Die Vertiefung weist vorteilhafterweise eine unregelmäßige Form auf, d.h. sie ist insbesondere nicht einfach rechteckig, kreisförmig oder elliptisch. Die Membran ist in ihrer Form der Vertiefung angepasst; sie kann gegebenenfalls für weitere Funktionen lateral nach außen verlängert sein. Die Vertiefung und Membran sind mit länglicher Erstreckung ausgebildet und zwischen den Ventilsitzen bzw. Membranbereichen mit einer geringeren Breite als in den Membranbereichen ausgebildet. Sie kann individuell an die Position und Anordnung der Ventilsitze angepasst sein. Hierbei ermöglicht sie ein großes Druckluftvolumen, das zum Inneren des Ventilgehäuses zunächst lediglich durch nachfolgende Ventile oder Bohrungen begrenzt ist.

Das Ventilgehäuse weist am Rand der Vertiefung vorteilhafterweise eine Schulter auf, auf die die Membran mit einem umlaufenden Dichtwulst gelegt wird. An die Schulter schließt sich ein z. B. senkrecht bzw. orthogonal zur Anlagefläche (Außenfläche) des Ventilgehäuses verlaufender Rand an. Hierbei wird vorteilhafterweise keine Presspassung oder Spielpassung, sondern eine Übergangspassung, d.h. eine Ausbildung der Membran in gleicher Längserstreckung bzw. Dimensionierung in der Ebene der Vertiefung ausgebildet. Am Rand liegt die Membran somit ohne Pressung oder ohne Spiel an. Es erfolgt somit zunächst vorteilhafterweise keine Radialdichtung; es wird vielmehr eine Axialdichtung zwischen dem Ventilgehäuse, d.h. der dem Dichtwulst aufnehmenden Schulter, und dem aufgesetzten Domgehäuse erreicht. Eine zusätzliche Radialdichtung kann bei nachfolgender Druckbeaufschlagung erfolgen.

Die Druckluft strömt über den Eingangs-Druckluftanschluss des Ventilgehäuses in die Vertiefung und beaufschlagt die Innenseite der Membran zunächst in Ringflächen der einzelnen Membranbereiche um die Ventilsitze herum. Die Membranbereiche werden von der Außenseite der Membran in an sich bekannter Weise mit einer Federkraft beaufschlagt. Hierbei sind einzelne Schraubenfedern durch z. B. Einstellschrauben individuell einstellbar. Es ist vorteilhafterweise ein gemeinsames Domgehäuse für die Einzeldome zur Ausbildung der separaten Federräume vorgesehen. Das Domgehäuse kann somit durch z. B. Schrauben am Ventilgehäuse befestigt werden und die Membran zwischen diesen beiden Gehäuseteilen aufnehmen.

Die Druckluftführung erfolgt somit von einer Ringfläche der Membranbereiche radial nach innen in den zentralen Ventilsitz hinein. Durch diese konstruktive Auslegung ist nunmehr die gemeinsame Ausbildung der Vertiefung als Druckluftzuführung ermöglicht, was bei herkömmlichen Systemen mit Druckluftführung von einer zentralen inneren Zuführung radial nach außen nicht möglich ist.

Das Domgehäuse weist vorteilhafterweise eine plane Domgehäuse-Auflagefläche, die die Membran von der Außenseite bzw. Federseite her großflächig abstützt. Somit wird die Membran zwischen den Membranbereichen an ihrer Außenfläche abgestützt. Durch diese Abstützung wird eine funktionelle Trennung der einzelnen Membranbereiche ermöglicht bzw. verbessert; beim Öffnen oder Schließen eines Membranbereichs werden benachbarte Membranbereiche nicht beeinflusst. Hierbei wird erkannt, dass diese Stützung durch das Domgehäuse ausreichend ist; um jeden Ventilsitz wird somit nicht wie z. B. in der EP 31903 A1 eine Abdichtung mit zwischen dem Ventilgehäuse und Deckel verpresstem Dichtwulst oder ähnlicher Trennung ausgebildet, die die Ausbildung eines großen Versorgungsraums erschwert oder verhindert. Es wird somit ein großes Volumen erreicht, komplexere Zuführungen zu den einzelnen Überströmventilen, d.h. Druckluftzuführungen zur Beaufschlagung der Membranbereiche, entfallen.

Die Federkraft wird durch die Schraubenfeder eingestellt, die einen Kolben von der Federseite her gegen einen radialen inneren, kreisförmigen Bereich der Membranbereiche drückt. Somit wirkt zunächst von der Druckluftseite bzw. Innenseite her die zugeführte Druckluft auf die äußere Ringfläche gegen die Federkraft, bis der Kolben abhebt, so dass der Druckluftstrom in die Ausgangsseite freigegeben wird, die nachfolgend ebenfalls eine Druckbeaufschlagung des zentralen, Kreisflächen-Bereichs ermöglicht, so dass der Öffnungsdruck größer als der Schließdruck ist.

Der umlaufende Dichtwulst weist vorteilhafterweise lateral innen eine senkrechte Kante und außen vorteilhafterweise ebenfalls eine senkrechte Kante auf, mit Einführfasen sowohl in dem Dichtwulst als vorteilhafterweise auch in der Formgebung des Ventilgehäuses im Bereich ihrer Schulter. Hierdurch wird eine Montage vereinfacht; eine Presspassung in radialer Richtung ist nicht erforderlich.

Die Formgebung der Vertiefung bzw. ihrer Schulter in dem Ventilgehäuse kann durch einen Druckguss, insbesondere Alu-Druckguss, bereits abschlie-ßend festgelegt werden; eine Nachbearbeitung ist grundsätzlich nicht erforderlich, was insbesondere auch durch das Fehlen einer radialen Presspassung erreicht wird. Es wird erkannt, dass für die axiale Dichtung die Fertigungsgenauigkeit des Gusses im Bereich des Randes und der Schulter ausreichend ist.

Die Erfindung ermöglicht weiterhin zusätzliche vorteilhafte Ausbildungen, die den konstruktiven Aufwand verringern. So können in der Domgehäuse-Anlagefläche, die zur großflächigen Anlage der Membran dient, Beatmungs-Rillen für die einzelnen Federräume der Einzeldome ausgebildet sein. Eine definierte Einstellung der Federkraft wird verbessert, wenn die die Schraubenfedern aufnehmenden Federräume einen definierten Luftdruck aufweisen, um nicht zusätzlich einen sich ändernden pneumatischen Druck von der Federseite her auf die Membran auszuüben. Die Beatmung kann durch Verbinden der einzelnen Federräume in dem Domgehäuse, insbesondere der Domgehäuse-Anlagefläche, erfolgen. Hierbei wird vorteilhafterweise erkannt, dass durch die gemeinsame Membran auch eine Beatmung des Domgehäuses über das Ventilgehäuse möglich ist, indem in der Membran eine z. B. schlaufenförmige Ausnehmung ausgebildet ist, die gegenüber der Vertiefung lateral versetzt ist. Somit wird eine Beatmung des Domgehäuses über die Beatmungsöffnung in der Membran bzw. dem verlängerten Bereich außerhalb des Dichtwulstes der Membran zu dem Ventilgehäuse ermöglicht, das hierfür z. B. eine Beatmungsbohrung aufweist, die z. B. über ein Dichtlabyrinth mit dem Außenraum verbunden ist. Es wird erkannt, dass die Ausbildung einer derartigen Beatmungsöffnung in der Membran außerhalb des Dichtwulstes die Funktionalität der Membran nicht behindert.

Somit wird durch einen geringen zusätzlichen Hardware-Aufwand eine sichere Beatmung der Einzeldome ermöglicht. Insbesondere wird durch eine derartige Beatmung auch die Gefahr einer Verschmutzung der Einzeldome durch die nicht unerheblichen Verschmutzungen und Feuchtigkeit in der Umgebungsluft des Domgehäuses verringert.

Gemäß einer weiteren vorteilhaften Ausbildung können nicht nur die parallel an die gemeinsame Versorgungskammer angeschlossenen Überströmventile, sondern auch weitere Ventile des Mehrkreis-Schutzventils, insbesondere nachgeschaltete Überströmventile für zusätzliche Verbraucherkreise, mittels der gemeinsamen Membran ausgebildet werden. Hierfür wird die Membran in lateraler Richtung über ihren Dichtwulst, der die Vertiefung bzw. Versorgungskammer abgrenzt, hinaus verlängert. Die Membran kann somit Zusatz-Membranbereiche für die Zusatz-Überströmventile ausbilden, die die Funktionalität der Überströmventile und der im Bereich der Vertiefung angeordneten Membranbereiche nicht beeinträchtigen. Es kann somit im Ventilgehäuse eine Zusatz-Vertiefung für mehrere, parallel angeschlossene Zusatz-Überströmventile ausgebildet sein. Dies ist insbesondere bei Ausbildungen mit z. B. zwei an eine nachfolgende Leitung parallel angeschlossene Zusatz-Überströmventile vorteilhaft.

Die erfindungsgemäße Luftaufbereitungsanlage kann somit das kompakte Mehrkreis-Schutzventil aufnehmen.

Die Erfindung wird im Folgenden anhand der beiliegenden Zeichnungen an einer Ausführungsform näher erläutert. Es zeigen:
- Fig. 1: eine auseinander gezogene Darstellung eines Mehrkreis-Schutzventils gemäß einer Ausführungsform der Erfindung;
- Fig. 2: die Darstellung aus Fig. 1 von perspektivischer Rückansicht;
- Fig. 3: eine Schnittansicht senkrecht durch die Membran; und
- Fig. 4: ein elektropneumatisches Schaltbild einer Luftaufbereitungsanlage mit dem Mehrkreis-Schutzventil.

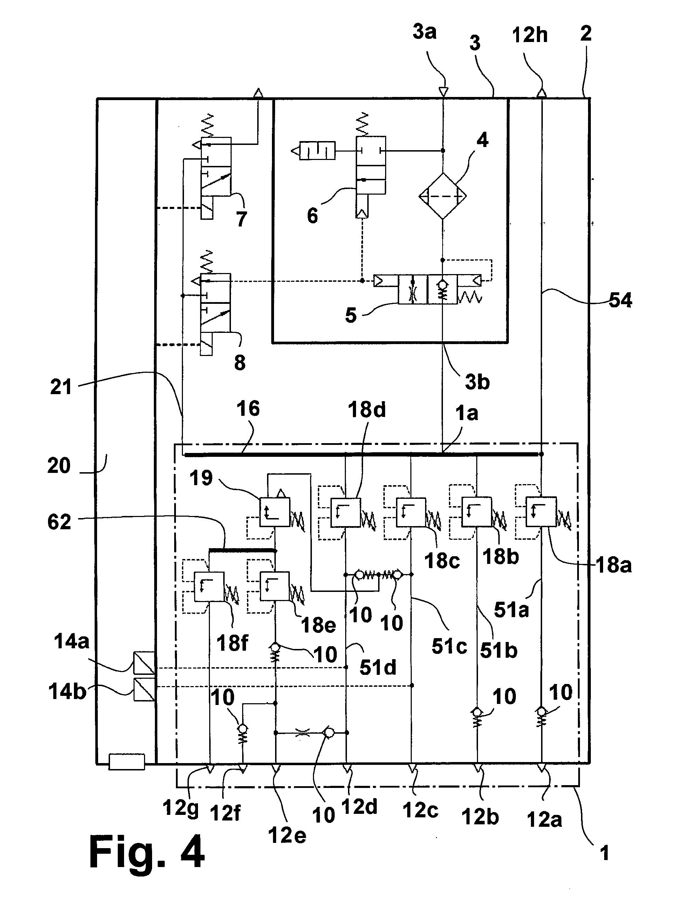

Ein Mehrkreis-Schutzventil 1 kann gemäß dem Schaltbild der Fig. 4 als Teil einer Luftaufbereitungsanlage 2 vorgesehen sein. Die Luftaufbereitungsanlage 2 weist gemäß einer vorteilhaften Weiterbildung einen Eingangsblock 3 mit einem Kompressoranschluss 3a zum Anschluss eines Kompressors, einer Lufttrockner-Kartusche 4, einem Steuerventil 5 (kombiniertes Rückschlag-Regenerationsventil), einem Spülventil 6 und einem Eingangsblock-Ausgang 3b auf. Weiterhin weist die Luftaufbereitungsanlage 2 das Mehrkreis-Schutzventil 1, ein Regenerationsventil 8 zum Entlüften der Lufttrockner-Kartusche 4 und zum Einleiten einer Regenerationsphase, sowie ein weiteres Funktionsventil 7 zum Abschalten des Kompressors, bzw. zum Betätigen einer Kompressorkupplung, auf.

Das Mehrkreis-Schutzventil 1 ist in Fig.4 als gestrichelter Block dargestellt, der ggf. noch weitere Komponenten aufnehmen kann. Das Mehrkreis-Schutzventil stellt somit eine Ventilanordnung bzw. ein Ventilsystem aus Leitungen und einzelnen Ventilen dar. An dem Mehrkreis-Schutzventil 1 sind ausgangsseitig direkt oder über Rückschlagventile 10, Druckluftausgänge 12a bis 12g vorgesehen, an die entsprechende Verbraucherkreise angeschlossen sind. Gemäß der gezeigten Ausführungsform können die Verbraucherkreis-Anschlüsse 12a bis 12g direkt am Mehrkreis-Schutzventilblock vorgesehen sein. Drucksensoren 14a, 14b sind an einzelne Verbraucherkreis-Anschlüsse angeschlossen, z. B. bereits in dem Mehrkreis-Schutzventilblock 1. In Fig. 4 ist schematisiert eine Steuereinrichtung (ECU) 20 angedeutet, die Drucksensoren 14a, 14b ausliest und elektrische Steuersignale an die elektropneumatischen Ventile, d. h. das Regenerationsventil 8 und das Funktionsventil 7 ausgibt. Die Ventile 5, 6 des Eingangsblocks 3 sowie die in dem Mehrkreis-Schutzventilblock 1 vorgesehenen Ventile sind rein pneumatisch. Es ist aber auch möglich, die elektropneumatischen Ventile im Mehrkreis-Schutzventil unterzubringen.

Der Eingangsanschluss 1 a des Mehrkreis-Schutzventilblocks 1 ist an den Eingangsblock-Ausgang 3b angeschlossen. In dem Mehrkreis-Schutzventilblock 1 ist eine in Fig. 4 als Versorgungsleitung gezeigte Versorgungskammer 16 ausgebildet, die an den Eingangsanschluss 1a angeschlossen ist und die eingehende Luft an einzelne Überströmventile 18a, 18b, 18c, 18d verteilt, die als Schutzventile für die nachfolgenden Verbraucherkreis-Anschlüsse 12a bis 12d dienen, so dass im Falle eines Bruchs bzw. einer Leckage ein Druckabfall in den angeschlossenen Verbraucherkreisen 12a bis 12d von den Überströmventilen 18a bis 18 d abgefangen wird und nicht zur gemeinsamen Versorgungskammer 16 weitergegeben wird; die Überströmventile 18a bis 18d weisen z. B. einen Öffnungsdruck von 7,5 bar auf , d. h. wenn an der Versorgungskammer 16 ein derartiger Öffnungsdruck anliegt, öffnen sie und geben die Verbindung zu den angeschlossenen Verbraucherkreisen 12a bis 12d frei. Die Öffnungsdrücke können hierbei etwas unterschiedlich ausgelegt sein, damit bei Inbetriebnahme der Luftaufbereitungsanlage 2, d. h. bei Belüften durch den angeschlossenen Kompressor, die einzelnen Überströmventile 18a bis 18d sukzessive nacheinander in festgelegter Reihenfolge öffnen und somit die nachfolgenden Verbraucherkreise mit Luft befüllen. Der Schließdruck der Überströmventile 18a bis 18d liegt z. B. im Bereich von 5 bar.

An die Verbraucherkreis-Anschlüsse 12c und 12d können z. B. die beiden Betriebsbrems-Kreise angeschlossen sein; 12a kann z. B. für die Niveauregulierung/Luftfederung dienen; 12f kann entsprechend für eine Feststellbremse dienen. Ansonsten ist: 12 e Anhängerversorgung, 12b sonstige Verbraucher, 12g sonstige Verbraucher. An die Ausgänge der Überströmventile 18c und 18d ist hier über Rückschlagventile 10 und ein Druckbegrenzungsventil 19 eine Zusatz-Versorgungskammer 62 angeschlossen, an die über Zusatz-Überströmventile 18e und 18f und Rückschlagventile 10 Verbraucherkreis-Anschlüsse 12e, 12f, 12g angeschlossen sind. Weiterhin ist an die Versorgungskammer 16 des Mehrkreis-Schutzventils 1 ohne ein zwischengeschaltetes Überströmventil oder weiteres Ventil ein Reifenfüll-Anschluss 12h angeschlossen, weiterhin z. B. die pneumatische Steuerleitung 21, an die die Ventile 7, 8 angeschlossen sind; das Funktionsventil 7 dient zum Abschalten des Kompressors (Kompressorsteuerventil).

Das Mehrkreis-Schutzventil 1 weist ein Ventilgehäuse 31 auf, das einteilig z. B. als Aluminium-Druckgussteil ausgebildet ist und vorteilhafterweise im Wesentlichen quaderförmig ist. Die Steuereinrichtung (ECU) 20 kann direkt an das Ventilgehäuse 31 geschraubt werden, sodass die Sensoren 14a, 14b ohne zusätzliche Zwischenleitungen wie z. B. Schläuche direkt an Bohrungen des Ventilgehäuses 31 gesetzt werden können.

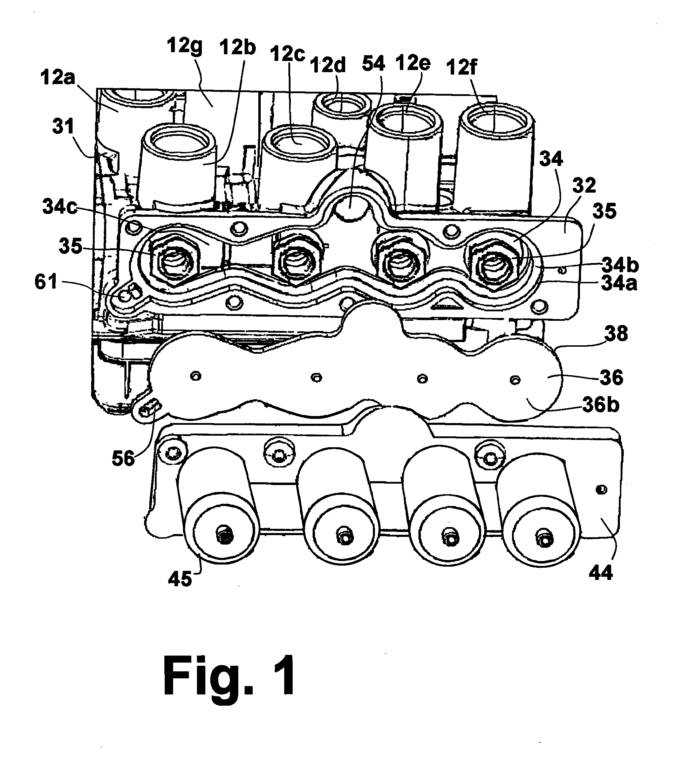

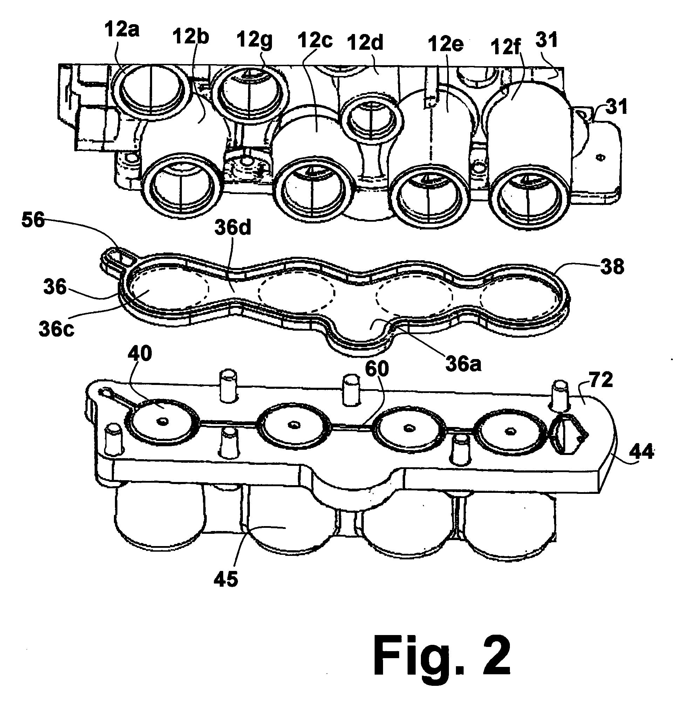

Die Ausgangsanschlüsse 12a bis 12g sind z. B. als Dome mit geeigneter Anschlussgeometrie ausgebildet, wie z. B. in Fig. 1, 2 ersichtlich ist; derartige Dome können beim Druckgussverfahren zur Herstellung des Ventilgehäuses 31 durch entsprechende Schieber erzeugt werden.

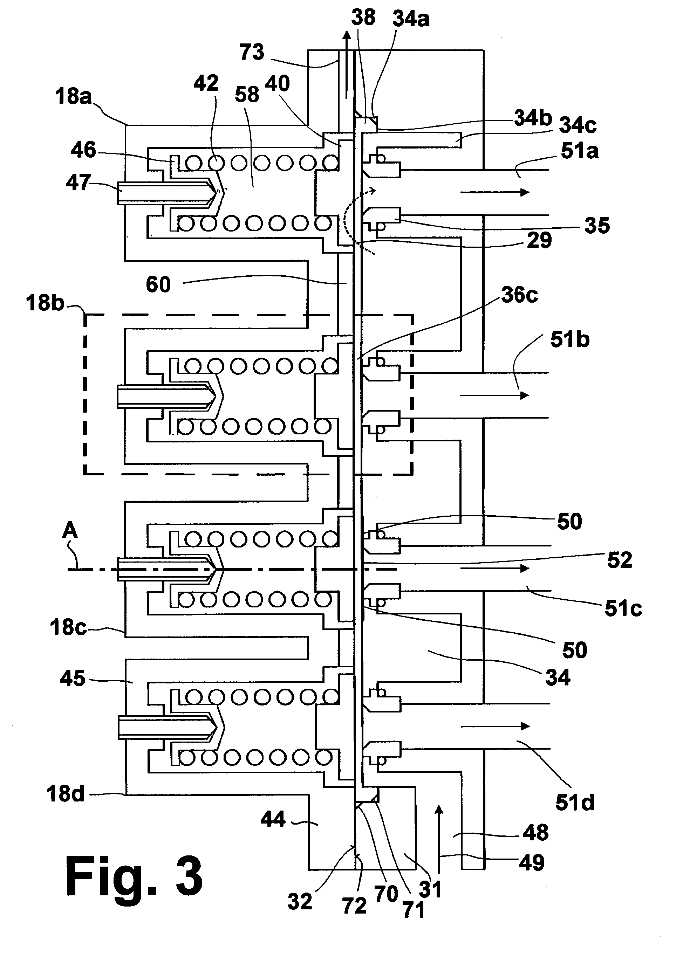

Die Ausbildung der Überströmventile 18a, b, c, d und der Versorgungskammer (Gallery) 16 ist detaillierter in Fig. 3 gezeigt, wobei hier zur Verdeutlichung das Überstromventil 18b gestrichelt abgegrenzt ist. Das Ventilgehäuse 31 ist an einer Stirnseite mit einer Anlagefläche 32 ausgebildet. Von der Anlagefläche 32 aus erstreckt sich eine Vertiefung 34 nach innen, die sich entlang der Anlagefläche 32 durchgehend mit z.B. länglicher, unregelmäßiger Form erstreckt. Ventilsitze 35 können einteilig mit dem Ventilgehäuse 31 bzw. als Teil des Ventilgehäuses 31, oder auch gemäß Fig. 3 als zusätzliche Bauteile am Ventilgehäuse 31 aufgenommen sein. Am Rand der Vertiefung 34 ist in dem Ventilgehäuse 31 eine sich in Axialrichtung A erstreckende Randfläche 34a (umlaufende Randkante) ausgebildet, an die sich eine (parallel zur Anlagefläche 32 verlaufende) Schulter 34b anschließt, wobei sich nachfolgend an die Schulter 34b eine weitere Vertiefung 34c anschließt, die grundsätzlich in Axialrichtung A nicht durch einen ebenen Grund begrenzt sein braucht.

Eine Membran 36 aus einem flexiblen Material, vorzugsweise einem Elastomer, z. B. Gummi oder künstlichem Gummi, weist einen der Vertiefung 34 entsprechenden Umriss mit einem lateral äußeren Dichtwulst 38 auf, der auf der Schulter 34b der Vertiefung 34 aufliegt und die Randfläche 34a berührt. Vorteilhafterweise ist die Membran 36 in radialer Richtung in Übergangspassung ausgebildet, d. h. weder mit Übermaß gegenüber der Randfläche 34a im Sinne einer Presspassung noch in Untermaß im Sinne einer Spielpassung mit lateralem Spiel. Bei einer Presspassung könnten Verwerfungen in der Membran 36 ausgebildet werden, die hier als unvorteilhaft erkannt werden. Ein seitliches Spiel ist ebenfalls nicht erforderlich und wird als nicht vorteilhaft angesehen. Der Dichtwulst 38 weist zum Ventilgehäuse 31 hin; die vom pneumatischen Druck beaufschlagte Seite der Membran 36 wird nachfolgend als Innenseite 36a bezeichnet. Auf der Außenseite 36b der Membran 36 liegt von jedem Überströmventil 18a, b, c, d jeweils ein Kolben (Ventilteller) 40 auf, der von einer Schraubenfeder 42 gegen die Membran 36 gedrückt wird; die Schraubenfedern 42 sind in Einzeldomen 45 gelagert, die als Teilbereiche eines Domgehäuses 44 ausgebildet sind. Das Domgehäuse 44 kann aus einem Metall, z. B. ebenfalls Aluminium, oder auch aus einem Kunststoff ausgebildet sein. Es kann aufgrund dieser Ausbildung vorteilhafterweise als Druckguss-Bauteil kostengünstig ausgebildet sein. Die Schraubenfedern 42 werden hierbei an ihrem den Kolben gegenüberliegenden Ende von Federauflagen 46 aufgenommen, die durch jeweils eine Einstellschraube 47, die in den jeweiligen Einzeldom 45 eingesetzt ist, längsverstellbar ist. Somit kann die Federvorspannung jeder Schraubenfeder 42 individuell eingestellt werden, um für jedes Überströmventil 18a, b, c, d jeweils einen eigenen Öffnungsdruck und Schließdruck einzustellen.

Somit weist jedes Überströmventil 18a, 18b, 18c, 18d einen Ventilsitz 35, einen Teilbereich 36c der Membran 36, einen Kolben 40, eine Schraubenfeder 42, eine Federaufnahme 46, eine Einstellschraube 47 und einen Einzeldom 45 auf. Die Versorgungskammer 16 ist somit als Teil der Überströmventile 18a bis 18d bzw. in der lateralen Ebene der Vertiefung 34 um die Überströmventile 18a bis 18d herum ausgebildet.

Druckluft 49 wird der Vertiefung 34 durch eine Zuführungs-Bohrung 48 innerhalb des Ventilgehäuses 31 zugeführt. Die Vertiefung 34 mitsamt der Zuführungs-Bohrung 48 und ggf. weiteren, mit diesen zusammenhängenden Bereichen bildet somit die Versorgungskammer 16. Im Wesentlichen ist die Versorgungskammer 16 jedoch durch die Vertiefung 34 gebildet. Die Druckluft strömt somit über die Zuführungs-Bohrung 48 in die Vertiefung 34 und liegt an der in Fig. 3 rechts liegenden Innenseite 36a an der Membran 36 um die einzelnen Ventilsitze 35 in dieser lateralen Ebene herum an. Es wird beim Befüllen zunächst um jeden Ventilsitz 35 herum eine Ringfläche 50 mit Druck beaufschlagt, die der Fläche des Kolbens 40 abzüglich der Kreisfläche, die durch den Ventilsitz 35 bestimmt ist, entspricht. Die innere Kreisfläche 52 der Innenseite 36a der Membran 36 ist zunächst nicht mit Druck beaufschlagt.

Entsprechend der Federeinstellung jeder Schraubenfeder 42 drücken die Kolben 40 individuell mit unterschiedlicher Kraft von der Außenseite 36b der Membran 36 gegen den pneumatischen Druck der Druckluft 49. Die Membran 36 ist hierbei derartig flexibel, dass lediglich die an dem jeweiligen Kolben 40 anliegende Fläche der Membran 36 gegen diesen Kolben 40 wirkt; lateral beabstandete Bereiche der Membran 36, die an der Anlagefläche 72 des Domgehäuses 44 anliegen, haben hierauf keinen Einfluss. Auf jeden Kolben 40 wirkt somit eine pneumatische Kraft, die durch den Druck der Druckluft 49 und die Ringfläche 50 bestimmt ist. Wenn das Produkt aus dem Luftdruck P der Druckluft 49 in der Vertiefung 34 und der Ringfläche 50 die Gegenkraft der Schraubenfeder 42 (unter Berücksichtigung des pneumatischen Atmosphärendrucks auf den Kolben 40) übersteigt, öffnet die Membran 36 lokal, d.h. wird in Fig. 3 nach links verstellt, so dass die Verbindung zwischen der Vertiefung 34 und der jeweiligen Ventil- Ausgangsleitung 51 a, b, c, d öffnet und ein Druckluftstrom 29 in den Ventilsitz 35 und die Ausgangsleitung 51a, b, c, d fließt. Hierdurch wird Druck in der Ausgangsleitung 51 a, b, c, d aufgebaut, der nachfolgend auf die Kreisfläche 52 einwirkt und das jeweilige Überströmventil 18a, b, c, d offen hält, bis der Schließdruck, der geringer als der Öffnungsdruck ist, unterschritten wird, wie als solches bekannt ist.

Die Membran 36 wird auf ihrer Außenseite 36b außerhalb ihrer Membranbereiche 36c, d.h. auch in Zwischenbereichen 36d zwischen den Membranbereichen 36c, von der planen Domgehäuse-Anlagefläche 72 abgestützt; hierdurch wird ein Nachgeben in diesen lateral zu den Ventilsitzen 35 versetzten Bereichen verhindert und eine gegenseitige Beeinflussung der Überströmventile auch ohne Einklemmen der Membran bzw. ohne Dichtwulst zwischen den Membranbereichen ausgeschlossen.

Die genaue Formgebung der Vertiefung 34 kann die jeweiligen Merkmale des Schaltbildes gemäß Fig. 4 berücksichtigen. So ist in dem Ventilgehäuse 31 wie aus Fig. 1 ersichtlich eine Bohrung 54 ausgebildet, die von dem Mehrkreis-Schutzventil 1 zu dem Reifenfüll-Anschluss 12h verläuft. Diese Bohrung 54 kann somit durch entsprechende Formgebung der Vertiefung 34 und der Membran 36 ohne weitere Probleme mit ausgebildet werden. Sie schließt somit direkt an die Vertiefung 34 an und wird von der Membran 36 gegenüber dem Domgehäuse 44 abgedichtet; sie kann auch als Verlängerung der Versorgungsleitung bzw. Versorgungskammer 16 aufgefasst werden. Weiterhin kann z. B. die Steuerleitung 21 an einer geeigneten Stelle von der Vertiefung 34, oder von der Bohrung 54, abgehen. Hieraus ergeben sich weitere Vorteile: Dadurch, dass z. B. die Bohrung 54 vorgegossen werden kann, ist sie nicht nachfolgend spannend zu bearbeiten. Dies erhöht die Qualität des Gussteiles. Außerdem entfallen die ansonsten erforderlichen zusätzlichen Bauteile zum Verschließen der Bohrung.

Wie insbesondere aus der Darstellung der Fig. 2 ersichtlich ist, kann eine gemeinsame Beatmung der Federräume (Innenräume) 58 der Einzeldome 45 gemeinsam über eine in dem Domgehäuse 44 ausgearbeitete Beatmungsrille 60 erfolgen, die insbesondere in der Domgehäuse-Anlagefläche 72 für die Membran 36 und die Anlagefläche 32 ausgebildet sein kann. Die Beatmungsrille 60 verbindet die einzelnen Federräume 58 und verläuft weiter an der Domgehäuse-Anlagefläche 72 lateral zu einem Bereich der nicht mehr der Vertiefung 34 gegenüber liegt. Hier ist in der Membran 36 lateral außerhalb des Dichtwulstes 38 eine Lasche 56 als pneumatischer Druckluftdurchlass ausgebildet, der somit die Beatmungsrille 60 mit einer Beatmungsbohrung 61 in dem Ventilgehäuse 31 verbindet, die z. B. über ein Dichtlabyrinth an einen Auslass angeschlossen ist. Somit erfolgt die Beatmung der Federräume 58 der Einzeldome 45 über ein Dichtlabyrinth des Ventilgehäuses 31 der Eintrag von Verschmutzungen in die Federräume 58 kann gegenüber einer direkten Beatmung der Federräume 58 somit deutlich verringert bzw. ganz vermieden werden. Alternativ hierzu kann gemäß Fig. 3 jedoch auch eine Beatmung durch einen sich in der Domgehäuse-Anlagefläche 72 lateral erstreckenden Kanal 73 erfolgen.

Weiterhin kann die Membran 36 durch separate Umrandung mittels weiterer Dichtwulste auch weitere Kammern zwischen dem Domgehäuse 44 und dem Ventilgehäuse 31 für zusätzliche pneumatische Führungen aufnehmen. Somit ist zunächst die gemeinsame Vertiefung 34 als Versorgungskammer 16 für die mehreren Überströmventile 18a, b, c, d vorgesehen, es können jedoch auch weitere Ventile über lateral angrenzende Bereiche bzw. laterale Verlängerungen der Membran 36 angeschlossen werden. Eine derartige Ausbildung ist z. B. aus dem Schaltbild der Fig. 4 ersichtlich: Hier ist an die Ventil-Ausgangsleitungen 51c und 51d der Überströmventile 18c und 18d über Rückschlagventile 10 das Druckbegrenzungsventil 19 und nachfolgend zwei parallel geschaltete Zusatz-Überströmventile 18e, 18f. geschaltet. Zwischen das Druckbegrenzungsventil 19 und die beiden Zusatz- Überströmventile 18e, 18f kann wiederum eine Zusatz-Versorgungskammer 62 angesetzt werden, so dass die Zusatz-Überströmventile 18e, 18f zusammen mit der Zusatz-Versorgungskammer 62 ausgebildet werden, entsprechend der kombinierten Ausbildung der Überströmventile 18a bis 18d und der Versorgungskammer 16 gemäß Fig. 3; somit kann die Zusatz-Versorgungskammer 62 auch lateral neben der Vertiefung 34 ausgebildet und über einen weiteren in der gemeinsamen Membran 36 ausgebildeten Dichtwulst von den funktionell anders genutzten Bereichen der Vertiefung 34 abgetrennt sein. Der Dichtwulst 38, der in der Vertiefung 34 die Versorgungskammer 16 definiert bzw. abgrenzt, begrenzt lateral die Versorgungskammer 16; in lateraler Richtung können weitere Zusatz-Versorgungskammern 62 und Zusatz-Überströmventile 18e, 18f anschließen; es kann ein gemeinsames Domgehäuse 44 vorgesehen sein, wobei auch die Federräume 58 gemeinsam entlüftet werden, da sie jeweils mit Atmosphärendruck versehen sind.

Grundsätzlich können somit zusätzliche Ventile des Mehrkreis- Schutzventils 1 in die Ausbildung der Membran 36 mit aufgenommen werden, so dass keine zusätzlichen Topfmanschetten bzw. Einzelmembranen für Ventile erforderlich sind.

Wie bereits ausgeführt wirkt die Membran 36 als Axialdichtung; sie dichtet in axialer Richtung, d. h. in Richtung der Symmetrieachse A und somit in Richtung der Druckbeaufschlagung bzw. des Kräftegleichgewichts. Sie ist zunächst nicht als Radialdichtung zum Abdichten gegen die Schulter 34b des Ventilgehäuses 31 ausgelegt. Entsprechend ist auch keine Presspassung oder Spielpassung, somit insbesondere keine radiale Pressung der Membran 36 gegen die Schulter 34b vorgesehen. Dies berücksichtigt die zunächst unsymmetrische Ausbildung der Membran 36, die an den Umriss der Vertiefung 34 angepasst ist und die Aufnahme zusätzlicher Bohrungen, Neigungen und einer entsprechenden Anzahl und Anordnung von Ventilen anpasst. Zur leichteren Einführung kann - wie aus Fig. 3 unten ersichtlich ist - die Kante zwischen der Randfläche 34a und der Anlagefläche 32 mit einer Einführfase 70, weiterhin der Dichtwulst 38 mit einer Einführfase 71 ausgebildet sein.

Die Vertiefung 34 weist vorteilhafterweise keinen ebenen Grund auf, sondern ist mit einer hinreichenden Tiefe ausgelegt; hierdurch wird Material eingespart.

Weiterhin können sich durch die großräumige Vertiefung 34 auch gegenüber herkömmlichen Ausbildungen Vorteile bei der Auslegung des Ventilgehäuses 31 als Gussteil ergeben. So können die Wandstärken der darunter befindlichen Gehäusegeometrien weitgehend optimiert werden; es können z. B. dünnere Wandstärken realisiert werden. Dies verbessert die Gussqualität des Ventilgehäuses 31; es sind z. B. dünnere Ausbildungen der darunter liegenden Wandstärken möglich, so dass z. B. die Ausbildung schädlicher Lunker vermieden oder verringert werden kann.

### Bezugszeichenliste

- 1: Mehrkreis-Schutzventil
- 1a: Eingangsanschluss
- 2: Luftaufbereitungsanlage
- 3: Eingangsblock
- 3a: Kompressoranschluss
- 3b: Eingangsblock-Ausgang
- 4: Lufttrockner,
- 5: Steuerventil (kombiniertes Rückschlag-Regenerationsventil)
- 6: Spülventil
- 7: Funktionsventil
- 8: Regenerationsventil
- 10: Rückschlagventile
- 12a-g: Druckluftausgänge
- 12h: Reifenfüll-Anschluss
- 14a-b: Drucksensoren
- 16: Versorgungskammer
- 18a-d: Überströmventile
- 19: Druckbremsungsventil
- 20: Steuereinrichtung (ECU)
- 21: Steuerleitung
- 29: Druckluftstrom
- 31: Ventilgehäuse
- 32: Anlagefläche
- 34: Vertiefung
- 34a: Randfläche (umlaufende Randkante)
- 34b: Schulter
- 34c: Vertiefung
- 35: Ventilsitze
- 36: Membran
- 36a: Innenseite
- 36b: Außenseite
- 36c: Teilbereich
- 38: Dichtwulst
- 40: Kolben
- 42: Schraubenfeder
- 45: Einzeldome
- 44: Domgehäuse
- 46: Federauflagen
- 47: Einstellschraube
- 48: Zuführungs-Bohrung
- 49: Druckluft
- 50: Ringfläche
- 51a-d: Ventil- Ausgangsleitung
- 52: innere Kreisfläche
- 54: Bohrung
- 56: Lasche
- 58: Federräume
- 60: Beatmungsrille
- 61: Beatmungsbohrung
- 62: Zusatz-Versorgungskammer
- 70: Einführfase
- 71: Einführfase
- 72: Domgehäuse-Anlagefläche
- 73: Kanal

## Patentansprüche

1. Mehrkreis-Schutzventil (1) für eine Luftaufbereitungsanlage (2), wobei das Mehrkreis-Schutzventil (1) mindestens aufweist:
mehrere Überströmventile (18a, 18b, 18c, 18d), die jeweils einen Ventilsitz (35) und einen an dem Ventilsitz (35) anliegenden Membranbereich (36c) aufweisen,
ein Ventilgehäuse (31), in dem Ventil-Ausgangsleitungen (51a, b, c, d) der Überströmventile (18a, 18b, 18c, 18d) ausgebildet sind,
wobei die Membranbereiche (36c) als Teilbereiche einer gemeinsamen Membran (36) aus einem flexiblen Material ausgebildet sind und
jeweils einen Druckluftstrom (29) in den Ventilsitz (35) freigeben oder sperren,
**dadurch gekennzeichnet, dass**
in dem Ventilgehäuse (31) eine gemeinsame Versorgungskammer (16) als Druckluftzufuhr zu den Überströmventilen (18a, 18b, 18c, 18d) ausgebildet ist, und
die gemeinsame Versorgungskammer (16) eine in dem Ventilgehäuse (31) ausgebildete Vertiefung (34) aufweist, die die Ventilsitze (35) umgibt.

2. Mehrkreis-Schutzventil (1) nach Anspruch 1, **dadurch gekennzeichnet, dass** die Vertiefung (34) durch eine Randfläche (34a) des Ventilgehäuses (31) begrenzt ist und die Membran (36) einen umlaufenden Dichtwulst (38) aufweist, der auf der Randfläche (34a) aufliegt und die mehreren Membranbereiche (36c) umgibt.

3. Mehrkreis-Schutzventil (1) nach Anspruch 2, **dadurch gekennzeichnet, dass** die Membran (36) mit ihrer pneumatisch beaufschlagten Innenseite (36a) auf den Ventilsitzen (35) und dem umlaufenden Rand der Vertiefung aufliegt, ohne dichtende Auflage ihrer zwischen den Membranbereichen (36c) ausgebildeten Zwischenbereichen (36d) auf dem Ventilgehäuse (31).

4. Mehrkreis-Schutzventil (1) nach Anspruch 2 oder 3, **dadurch gekennzeichnet, dass** der umlaufende Dichtwulst (38) auf einer Schulter (34b) des Ventilgehäuses (31) aufliegt, die zwischen einer äußeren Anlagefläche (32) des Ventilgehäuses (31) zur Anlage eines Domgehäuses (44) und einem Grund der Vertiefung (34) ausgebildet ist,
wobei die Schulter umlaufend um die Überströmventile (18a, 18b, 18c, 18d) herum ausgebildet ist und die Membran (36) in axialer Richtung zwischen der Schulter und der Anlagefläche (72) des Domgehäuses (44) abdichtet, vorzugsweise ohne radiale Verpressung.

5. Mehrkreis-Schutzventil nach einem der vorherigen Ansprüche, **dadurch gekennzeichnet,**
**dass** die Überströmventile (18a, 18b, 18c, 18d) jeweils einen Kolben (40) zur Anlage auf einem Membranbereich (36c), eine den Kolben (40) vorspannende Federeinrichtung (42) und einen die Federeinrichtung (42) aufnehmenden Einzeldom (45) aufweisen,
wobei die Einzeldome (45) in einem gemeinsamen Domgehäuse (44) ausgebildet sind, das mit einer Domgehäuse-Anlagefläche (72) an einer Anlagefläche (32) des Ventilgehäuses (31) anliegt und befestigt ist.

6. Mehrkreis-Schutzventil (1) nach Anspruch 5, **dadurch gekennzeichnet, dass** die Membran (36) auf ihrer Außenseite (36b) in zwischen den Membranbereichen (36c) ausgebildeten Zwischenbereichen (36d) von der Domgehäuse-Anlagefläche (72) gestützt ist.

7. Mehrkreis-Schutzventil (1) nach Anspruch 5 oder 6, **dadurch gekennzeichnet, dass** die Einzeldome (45) jeweils Federräume (58) umgeben und die Federräume (58) der mehreren Überströmventile (18a, 18b, 18c, 18d) miteinander verbunden und gemeinsam entlüftet oder beatmet sind.

8. Mehrkreis-Schutzventil (1) nach Anspruch 7, **dadurch gekennzeichnet, dass** für die gemeinsame Beatmung oder Entlüftung eine die Federräume (58) verbindende, in der Domgehäuse- Anlagefläche (72) ausgebildete und gegenüber der Vertiefung (34) durch die Membran (36) abgedichtete Beatmungsrille (60) vorgesehen ist.

9. Mehrkreis-Schutzventil (1) nach Anspruch 8, **dadurch gekennzeichnet, dass** die Beatmungsrille (60) an eine Beatmungsleitung (61), z. B. Beatmungsbohrung (61), des Ventilgehäuses (31) angeschlossen ist, wobei die Membran (36) einen Druckluftdurchlass (56) zur Verbindung der Beatmungsrille (60) mit der Beatmungsleitung (61) aufweist,
wobei der Druckluftdurchlass (56) von den Membranbereichen (36c) dichtend abgetrennt ist.

10. Mehrkreis-Schutzventil (1) nach Anspruch 9, **dadurch gekennzeichnet, dass** der Druckluftdurchlass (56) als außerhalb eines die Vertiefung (34) abgrenzenden Dichtwulstes (38) der Membran (36) ausgebildet ist, z. B. als Lasche (56) oder Schlaufenbereich.

11. Mehrkreis-Schutzventil (1) nach einem der Ansprüche 5 bis 10, **dadurch gekennzeichnet, dass** die Vertiefung (34) sich von der Anlagefläche (32) aus in das Ventilgehäuse (31) erstreckt.

12. Mehrkreis-Schutzventil (1) nach einem der vorherigen Ansprüche, **dadurch gekennzeichnet, dass** die Membran (36) mit länglicher Erstreckung ausgebildet ist und in Zwischenbereichen (36d) zwischen den Membranbereichen (36c) mit einer geringeren Breite als in den Membranbereichen (36c) ausgebildet ist.

13. Mehrkreis-Schutzventil (1) nach einem der vorherigen Ansprüche, **dadurch gekennzeichnet, dass** es zusätzlich zu den an die Versorgungskammer (16) angeschlossenen, parallel geschalteten Überströmventilen (18a, 18b, 18c, 18d) nachgeschaltete Zusatz-Überströmventile (18e, 18f) aufweist, die parallel an eine Zusatz-Versorgungskammer (62) angeschlossen sind,
wobei weitere Membranbereiche der gemeinsamen Membran (36) Teile der Zusatz-Überströmventile (18e, 18f) bilden und die Zusatz-Versorgungskammer (62) als eine von der Vertiefung (34) durch mindestens einen Dichtwulst der Membran (36) pneumatisch getrennte Zusatz-Vertiefung ausgebildet ist.

14. Luftaufbereitungsanlage (2) mit einem Mehrkreis-Schutzventil (1) nach einem der vorherigen Ansprüche, einer Lufttrockner-Kartusche (4), einem Kompressoranschluss (3a) und Ventilen (5, 6, 7, 8) zur Einstellung verschiedener Betriebsphasen.

## Claims

1. Multi-circuit protection valve (1) for an air treatment system (2), wherein the multi-circuit protection valve (1) has at least:
multiple flow transfer valves (18a, 18b, 18c, 18d) which each have a valve seat (35) and a diaphragm region (36c) bearing against the valve seat (35),
a valve housing (31) in which valve outlet lines (51a, b, c, d) of the flow transfer valves (18a, 18b, 18c, 18d) are formed,
wherein the diaphragm regions (36c) are formed as sub-regions of a common diaphragm (36) composed of a flexible material and each permit or block a compressed-air stream (29) into the valve seat (35),
**characterized in that**
a common supply chamber (16), as a compressed-air feed to the flow transfer valves (18a, 18b, 18c, 18d), is formed in the valve housing (31), and
the common supply chamber (16) has a depression (34) which is formed in the valve housing (31) and which surrounds the valve seats (35).

2. Multi-circuit protection valve (1) according to Claim 1, **characterized in that** the depression (34) is delimited by an edge surface (34a) of the valve housing (31) and the diaphragm (36) has an encircling sealing bead (38) which lies against the edge surface (34a) and surrounds the multiple diaphragm regions (36c).

3. Multi-circuit protection valve (1) according to Claim 2, **characterized in that** the diaphragm (36) lies with its pneumatically loaded inner side (36a) against the valve seats (35) and the encircling edge of the depression, without its intermediate regions (36d) formed between the diaphragm regions (36c) lying sealingly against the valve housing (31).

4. Multi-circuit protection valve (1) according to Claim 2 or 3, **characterized in that** the encircling sealing bead (38) lies against a shoulder (34b) of the valve housing (31), said shoulder being formed between an outer abutment surface (32) of the valve housing (31) for the abutment of a dome housing (44) and a base of the depression (34), wherein the shoulder is formed in an encircling manner around the flow transfer valves (18a, 18b, 18c, 18d) and the diaphragm (36) seals in the axial direction between the shoulder and the abutment surface (72) of the dome housing (44) preferably without radial compression.

5. Multi-circuit protection valve according to one of the preceding claims, **characterized**
**in that** the flow transfer valves (18a, 18b, 18c, 18d) each have a piston (40) for abutment against a diaphragm region (36c), a spring device (42) which preloads the piston (40), and an individual dome (45) which accommodates the spring device (42),
wherein the individual domes (45) are formed in a common dome housing (44) which, by way of a dome housing abutment surface (72), abuts against and is fastened to an abutment surface (32) of the valve housing (31).

6. Multi-circuit protection valve (1) according to Claim 5, **characterized in that** the diaphragm (36), on its outer side (36b), in intermediate regions (36d) formed between the diaphragm regions (36c), is supported by the dome housing abutment surface (72).

7. Multi-circuit protection valve (1) according to Claim 5 or 6, **characterized in that** the individual domes (45) each surround spring chambers (58), and the spring chambers (58) of the multiple flow transfer valves (18a, 18b, 18c, 18d) are connected to one another and are deaerated or aerated jointly.

8. Multi-circuit protection valve (1) according to Claim 7, **characterized in that**, for the common aeration or deaeration, there is provided an aeration groove (60) which connects the spring chambers (58), which is formed in the dome housing abutment surface (72) and which is sealed with respect to the depression (34) by the diaphragm (36).

9. Multi-circuit protection valve (1) according to Claim 8, **characterized in that** the aeration groove (60) is connected to an aeration line (61), for example aeration bore (61), of the valve housing (31), wherein the diaphragm (36) has a compressed-air passage (56) for connecting the aeration groove (60) to the aeration line (61), wherein the compressed-air passage (56) is sealingly separated from the diaphragm regions (36c).

10. Multi-circuit protection valve (1) according to Claim 9, **characterized in that** the compressed-air passage (56) is formed outside a sealing bead (38), which delimits the depression (34), of the diaphragm (36), for example as a tab (56) or loop region.

11. Multi-circuit protection valve (1) according to one of Claims 5 to 10, **characterized in that** the depression (34) extends into the valve housing (31) from the abutment surface (32).

12. Multi-circuit protection valve (1) according to one of the preceding claims, **characterized in that** the diaphragm (36) is of longitudinally elongate form and is formed with a smaller width in intermediate regions (36d) between the diaphragm regions (36c) than in the diaphragm regions (36c).

13. Multi-circuit protection valve (1) according to one of the preceding claims, **characterized in that**, in addition to the flow transfer valves (18a, 18b, 18c, 18d) which are connected to the supply chamber (16) and which are interconnected in parallel, said multi-circuit protection valve has downstream auxiliary flow transfer valves (18e, 18f) which are connected in parallel to an auxiliary supply chamber (62),
wherein further diaphragm regions of the common diaphragm (36) form parts of the auxiliary flow transfer valves (18e, 18f), and the auxiliary supply chamber (62) is in the form of an auxiliary depression which is pneumatically separated from the depression (34) by at least one sealing bead of the diaphragm (36).

14. Air treatment system (2) having a multi-circuit protection valve (1) according to one of the preceding claims, having an air dryer cartridge (4), having a compressor port (3a) and having valves (5, 6, 7, 8) for setting different operating phases.

## Revendications

1. Vanne de protection à plusieurs circuits (1) pour une installation de préparation de l'air (2), la vanne de protection à plusieurs circuits (1) présentant au moins :
plusieurs vannes de décharge (18a, 18b, 18c, 18d) qui présentent à chaque fois un siège de vanne (35) et une région de membrane (36c) s'appliquant contre le siège de vanne (35),
un boîtier de vanne (31), dans lequel sont réalisées des conduites de sortie de vanne (51a, b, c, d) des vannes de décharge (18a, 18b, 18c, 18d),
les régions de membrane (36c) étant réalisées sous forme de régions partielles d'une membrane commune (36) en matériau flexible et
libérant ou bloquant à chaque fois un flux d'air sous pression (29) dans le siège de vanne (35),
**caractérisée en ce**
**qu'**une chambre d'alimentation commune (16) est réalisée dans le boîtier de vanne (31) en tant qu'alimentation en air sous pression pour les vannes de décharge (18a, 18b, 18c, 18d), et
la chambre d'alimentation commune (16) présente un renfoncement (34) réalisé dans le boîtier de vanne (31), qui entoure les sièges de vanne (35).

2. Vanne de protection à plusieurs circuits (1) selon la revendication 1, **caractérisée en ce que** le renfoncement (34) est limité par une surface de bord (34a) du boîtier de vanne (31) et la membrane (36) présente un bourrelet d'étanchéité périphérique (38) qui repose sur la surface de bord (34a) et qui entoure la pluralité de régions de membrane (36c).

3. Vanne de protection à plusieurs circuits (1) selon la revendication 2, **caractérisée en ce que** la membrane (36), avec son côté intérieur sollicité pneumatiquement (36a), repose sur les sièges de vanne (35) et sur le bord périphérique du renfoncement, sans appui hermétique de ses régions intermédiaires (36d) réalisées entre les régions de membrane (36c) sur le boîtier de vanne (31).

4. Vanne de protection à plusieurs circuits (1) selon la revendication 2 ou 3, **caractérisée en ce que** le bourrelet d'étanchéité périphérique (38) repose sur un épaulement (34b) du boîtier de vanne (31) qui est réalisé entre une face d'appui extérieure (32) du boîtier de vanne (31) pour l'appui d'un boîtier de dôme (44) et d'une base du renfoncement (34),
l'épaulement étant réalisé tout autour des vannes de décharge (18a, 18b, 18c, 18d) et réalisant l'étanchéité de la membrane (36) dans la direction axiale entre l'épaulement et la face d'appui (72) du boîtier de dôme (44), de préférence sans pressage radial.

5. Vanne de protection à plusieurs circuits selon l'une quelconque des revendications précédentes, **caractérisée en ce que**
les vannes de décharge (18a, 18b, 18c, 18d) présentent chacune un piston (40) pour l'appui sur une région de membrane (36c), un dispositif de ressort (42) précontraignant le piston (40) et un dôme individuel (45) recevant le dispositif de ressort (42),
les dômes individuels (45) étant réalisés dans un boîtier de dôme commun (44) qui s'applique avec une face d'appui de boîtier de dôme (72) et est fixé contre une face d'appui (32) du boîtier de vanne (31).

6. Vanne de protection à plusieurs circuits (1) selon la revendication 5, **caractérisée en ce que** la membrane (36) est supportée sur son côté extérieur (36b) dans des régions intermédiaires (36d) réalisées entre les régions de membrane (36c), par la face d'appui de boîtier de dôme (72).

7. Vanne de protection à plusieurs circuits (1) selon la revendication 5 ou 6, **caractérisée en ce que** les dômes individuels (45) entourent à chaque fois des espaces de ressort (58) et les espaces de ressort (58) de la pluralité de vannes de décharge (18a, 18b, 18c, 18d) sont reliés les uns aux autres et sont désaérés ou ventilés en commun.

8. Vanne de protection à plusieurs circuits (1) selon la revendication 7, **caractérisée en ce que** pour la ventilation ou le désaérage commun, il est prévu une rainure de ventilation (60) reliant les espaces de ressort (58), réalisée dans la face d'appui de boîtier de dôme (72) et étanchéifiée par rapport au renfoncement (34) par la membrane (36).

9. Vanne de protection à plusieurs circuits (1) selon la revendication 8, **caractérisée en ce que** la rainure de ventilation (60) est raccordée à une conduite de ventilation (61), par exemple un alésage de ventilation (61), du boîtier de vanne (31), la membrane (36) présentant un passage d'air comprimé (56) pour la connexion de la rainure de ventilation (60) à la conduite de ventilation (61), le passage d'air comprimé (56) étant séparé de manière hermétique des régions de membrane (36c).

10. Vanne de protection à plusieurs circuits (1) selon la revendication 9, **caractérisée en ce que** le passage d'air comprimé (56) est réalisé dans la membrane (36) à l'extérieur d'un bourrelet d'étanchéité (38) limitant le renfoncement (34), par exemple sous forme de patte (56) ou de région formant boucle.

11. Vanne de protection à plusieurs circuits (1) selon l'une quelconque des revendications 5 à 10, **caractérisée en ce que** le renfoncement (34) s'étend depuis la face d'appui (32) jusque dans le boîtier de vanne (31).

12. Vanne de protection à plusieurs circuits (1) selon l'une quelconque des revendications précédentes, **caractérisée en ce que** la membrane (36) est réalisée avec une étendue longitudinale et est réalisée dans les régions intermédiaires (36d) entre les régions de membrane (36c) avec une plus faible largeur que dans les régions de membrane (36c).

13. Vanne de protection à plusieurs circuits (1) selon l'une quelconque des revendications précédentes, **caractérisée en ce qu'**elle présente en plus des vannes de décharge (18a, 18b, 18c, 18d) raccordées à la chambre d'alimentation (16), montées en parallèle, des vannes de décharge supplémentaires (18e, 18f) disposées en aval, qui sont raccordées parallèlement à une chambre d'alimentation supplémentaire (62),
des régions de membrane supplémentaires de la membrane commune (36) formant des parties des vannes de décharge supplémentaires (18e, 18f) et la chambre d'alimentation supplémentaire (62) étant réalisée sous la forme d'un renfoncement supplémentaire séparé pneumatiquement du renfoncement (34) par au moins un bourrelet d'étanchéité de la membrane (36).

14. Installation de préparation de l'air (2) comprenant une vanne de protection à plusieurs circuits (1) selon l'une quelconque des revendications précédentes, une cartouche de dessiccateur d'air (4), un raccord de compresseur (3a) et des vannes (5, 6, 7, 8) pour l'ajustement de différentes phases de fonctionnement.
